# EUROPÄISCHE PATENTANMELDUNG

(11) **EP 3 572 911 A1**
(43) Veröffentlichungstag der Anmeldung: **27.11.2019**
(21) Anmeldenummer: 18173962.4
(22) Anmeldetag: 24.05.2018
(51) Int. Cl.: G06F 3/01, G06F 3/0481, G06F 3/0488

(54) **INTERAKTIVER AUTOMAT UND VERFAHREN ZUR OPTIMIERUNG DER BENUTZERFÜHRUNG UND ERGONOMIE WÄHREND DER BEDIENUNG DES INTERAKTIVEN AUTOMATEN**

(71) Anmelder: SKIDATA AG, 5083 Grödig/Salzburg (AT)
(72) Erfinder: Reichartzeder, Simon, 5165 Berndorf (AT)
(74) Vertreter: Karakatsanis, Georgios

(57) **Zusammenfassung**

Es wird ein interaktiver Automat (1) umfassend eine Benutzeroberfläche (4) vorgeschlagen, welcher zumindest eine Kamera (2) aufweist, deren Bilder in einer Auswerteeinheit ausgewertet werden, um Informationen über den aktuellen Benutzer (3) zu gewinnen, wobei anhand der gewonnenen Informationen die Benutzerführung und/oder für den Fall, dass die Benutzeroberfläche (4) des interaktiven Automaten (1) einen berührungsempfindlichen Bildschirm (11) aufweist, die Anordnung der Bedienflächen des berührungsempfindlichen Bildschirms (11) anpassbar sind.

## Beschreibung

Die vorliegende Erfindung bezieht sich auf einen interaktiven Automaten gemäß dem Oberbegriff des Patentanspruchs 1. Des Weiteren bezieht sich die Erfindung auf ein Verfahren zur Optimierung der Benutzerführung und Ergonomie während der Bedienung des interaktiven Automaten.

Interaktive Automaten sind weit verbreitet. Beispielsweise sind interaktive Bezahl- und Verkaufsautomaten für Waren und Dienstleistungen, Informationsterminals und dergl. bekannt.

Aus dem Stand der Technik ist bekannt, zur Optimierung der Benutzerführung bei der Bedienung von interaktiven Automaten unterschiedliche Farben sowie leuchtende oder blinkende Elemente zu verwenden, wobei die ergonomische Anordnung der Benutzeroberflächen der Automaten zunehmend an Bedeutung gewinnt.

Dennoch besteht die Notwendigkeit die Benutzerführung bei interaktiven Automaten zu verbessern, da es oft zu Problemen bei der Bedienung der Automaten kommt, was unter anderem durch die steigende Komplexität und Funktionsvielfalt der Automaten bedingt ist.

Der vorliegenden Erfindung liegt die Aufgabe zugrunde, einen interaktiven Automaten mit verbesserter Benutzerführung und Ergonomie anzugeben. Des Weiteren soll ein Verfahren zur Optimierung der Benutzerführung und Ergonomie während der Bedienung des interaktiven Automaten angegeben werden.

Diese Aufgabe wird für einen interaktiven Automaten durch die Merkmale des Patentanspruchs 1 gelöst. Ein Verfahren zur Optimierung der Benutzerführung und Ergonomie während der Bedienung des interaktiven Automaten ist Gegenstand des unabhängigen Patentanspruchs 7.

Weitere Ausgestaltungen und Vorteile gehen aus den entsprechenden Unteransprüchen hervor.

Demnach wird ein interaktiver Automat vorgeschlagen, welcher zumindest eine Kamera aufweist, deren Bilder in einer Auswerteeinheit ausgewertet werden, um Informationen über den aktuellen Benutzer zu gewinnen, wobei anhand der gewonnenen Informationen die Benutzerführung und/oder für den Fall, dass der Automat einen berührungsempfindlichen Bildschirm aufweist, die Anordnung der Bedienflächen anzupassen.

Die Informationen, die erfindungsgemäß über den aktuellen Benutzer mittels der zumindest einen Kamera gewonnen werden, können unterschiedlicher Art sein. Beispielsweise kann mittels der zumindest einen Kamera ein sogenanntes Eye- und/oder Face-Tracking durchgeführt werden, um dadurch zu ermitteln, auf welchen Bereich der Benutzeroberfläche der aktuelle Benutzer gerade blickt. Basierend auf dieser Information kann die Benutzerführung optimiert werden, indem optische und/oder akustische Signale generiert werden, welche die Aufmerksamkeit des aktuellen Benutzers auf einen nächsten Bedienschritt oder auf eine über eine Anzeigevorrichtung des Automaten angezeigte Information richten.

Ferner kann mittels des Eye- und/oder Face-Tracking und/oder mittels einer Analyse des Gesichtsausdrucks anhand der Bilder der zumindest einen Kamera die aktuelle Gemütslage des aktuellen Benutzers ermittelt werden, wobei, wenn eine schlechte Gemütslage oder ein ratloser Gesichtsausdruck erkannt wird, eine Kommunikationsverbindung über eine Interkom-Anlage oder Video-Sprechanlage hergestellt wird, um dem Benutzer Hilfe anzubieten.

Des Weiteren können über die Kameras Informationen über das Alter und das Geschlecht des aktuellen Benutzers gewonnen werden, wobei insbesondere für den Fall eines Informationsterminals auf diese Eigenschaften maßgeschneiderte Informationen angezeigt werden. Für den Fall eines Verkaufsautomaten können anhand dieser Informationen geeignete Produkte beworben werden.

Zudem kann über die Auswertung der Bilder der zumindest einen Kamera die Größe des aktuellen Benutzers ermittelt werden, wobei für den Fall, dass die Benutzeroberfläche des interaktiven Automaten einen berührungsempfindlichen Bildschirm aufweist, die Anordnung der Bedienflächen an die Größe des Benutzers angepasst wird.

Gemäß der Erfindung kann nach der Ermittlung des Teiles des berührungsempfindlichen Bildschirms, auf den der aktuellen Benutzer gerade blickt, auf genau diesen Teil des Bildschirmes die nächste zu bedienende Bedienfläche angeordnet werden. Ferner kann nach der Betätigung einer Bedienfläche des berührungsempfindlichen Bildschirms die bereits betätigte Bedienfläche durch die nächste zu bedienende Bedienfläche ersetzt werden.

Ferner kann mittels der zumindest einen Kamera erkannt werden, ob der aktuelle Benutzer Bargeld oder eine Kreditkarte in der Hand hält, um auf diese Weise mittels optischer und/oder akustischer Signale die Aufmerksamkeit des Benutzers auf das entsprechende Modul, beispielsweise das Modul zur Kreditkartenaufnahme des interaktiven Automaten zu richten.

Im Rahmen einer weiteren Ausgestaltung kann in Abhängigkeit des Gemütszustandes des Benutzers ein Gutschein erstellt und ausgedruckt werden, wenn die Stimmungslage des Benutzers aufgrund der Bedienung des Automaten schlecht ist.

Gemäß einer weiteren Ausgestaltung kann ein erfindungsgemäßer interaktiver Automat zumindest ein an der dem Benutzer zugewandten Seite angeordnetes Mikrofon aufweisen, mittels dessen anhand der Stimme und der Ausdrucksweise des aktuellen Benutzers dessen Gemütslage erkannt werden kann.

Die Erfindung wird im Folgenden anhand der beifügten Figuren beispielhaft näher erläutert. Es zeigen:
Figur 1: Eine schematische perspektivische Ansicht eines erfindungsgemäß ausgeführten interaktiven Automaten;
Figur 2: Eine schematische perspektivische Ansicht eines erfindungsgemäß ausgeführten interaktiven Automaten zur Veranschaulichung der Optimierung der Benutzerführung durch optische Signale, welche die Aufmerksamkeit des Benutzers basierend auf Eye-Tracking auf einen nächsten Bedienschritt richten;
Figur 3: Eine schematische perspektivische Ansicht eines erfindungsgemäß ausgeführten interaktiven Automaten zur Veranschaulichung der Optimierung der Benutzerführung durch eine personenbezogene Anordnung der Bedienflächen eines berührungsempfindlichen Bildschirms; und
Figur 4: ein Flussdiagramm zur Veranschaulichung einer Ausgestaltung des erfindungsgemäßen Verfahrens zur Optimierung der Benutzerführung und Ergonomie während der Bedienung eines gemäß der Erfindung ausgeführten interaktiven Automaten.

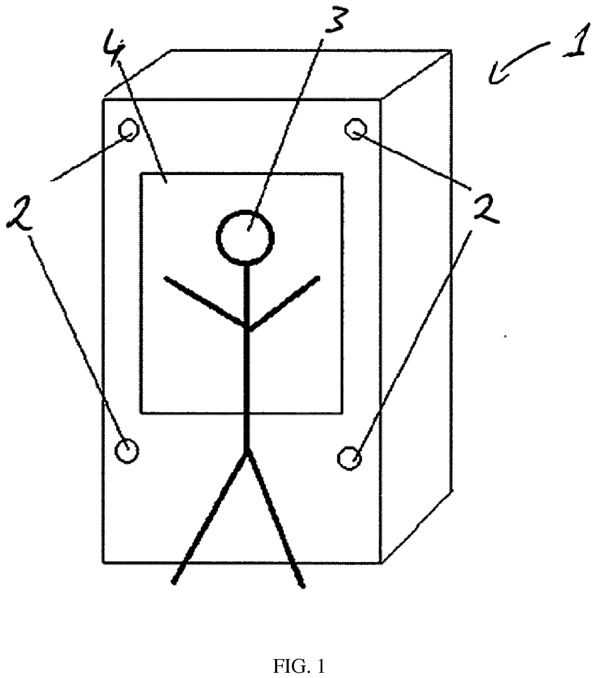

Gemäß der Erfindung und bezugnehmend auf Figur 1 umfasst ein interaktiver Automat 1 zumindest eine Kamera 2; bei dem gezeigten Beispiel sind vier Kameras 2 vorgesehen. Die Bilder der Kameras 2 werden in einer nicht dargestellten Auswerteeinheit ausgewertet, um in Echtzeit Informationen über den aktuellen Benutzer 3 zu gewinnen, wobei anhand der gewonnenen Informationen die Benutzerführung und/oder für den Fall, dass der Automat einen berührungsempfindlichen Bildschirm aufweist, die Anordnung der Bedienflächen der Benutzeroberfläche 4 angepasst wird. Die Auswerteeinheit kann im Automaten 1 angeordnet sein; alternativ kann die Auswerteeinheit in einen mit dem Automaten 1 datentechnisch verbundenen Server integriert sein.

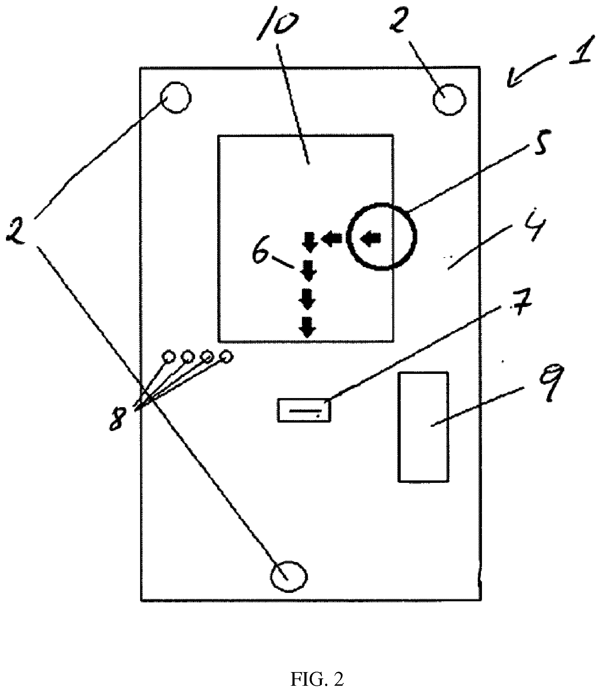

Mittels der zumindest einen Kamera 2 kann sogenanntes Eye- und/oder Face-Tracking durchgeführt werden, um dadurch zu ermitteln, auf welchen Bereich der Benutzeroberfläche 4 der aktuellen Benutzer gerade blickt, wobei anhand dieser Information die Benutzerführung optimiert wird, indem optische Signale generiert werden, die die Aufmerksamkeit des aktuellen Benutzers auf einen nächsten Bedienschritt richten. Eine derartige Situation ist Gegenstand der Figur 2.

In Figur 2 ist ein Bezahlautomat 1 für Parkgebühren dargestellt, umfassend eine Benutzeroberfläche 4 aufweisend ein Modul 7 zur Aufnahme eines Tickets, Auswahl/Bedientasten 8 und ein Bezahlmodul 9, welches eine Münzaufnahme und ein Modul zur Aufnahme eines kartenförmigen Zahlungsmittels aufweist. Hierbei wurde mittels Eye- und/oder Face-Tracking ermittelt, dass der aktuelle Benutzer auf den mit 5 bezeichneten Bereich blickt, so dass seine Aufmerksamkeit mittels leuchtender Pfeile 6 auf den nächsten Bedienschritt, bei dem gezeigten Beispiel auf das Modul 7, zur Aufnahme eines Tickets 7 gerichtet wird.

Ein Teil 10 der Benutzeroberfläche 4 ist derart ausgeführt, dass leuchtende Pfeile in Abhängigkeit des Bereiches, auf den ein aktueller Benutzer blickt und des nächsten Bedienschrittes darstellbar sind. Beispielsweise kann ein Teil 10 der Benutzeroberfläche 4 als TFT-Display ausgeführt sein.

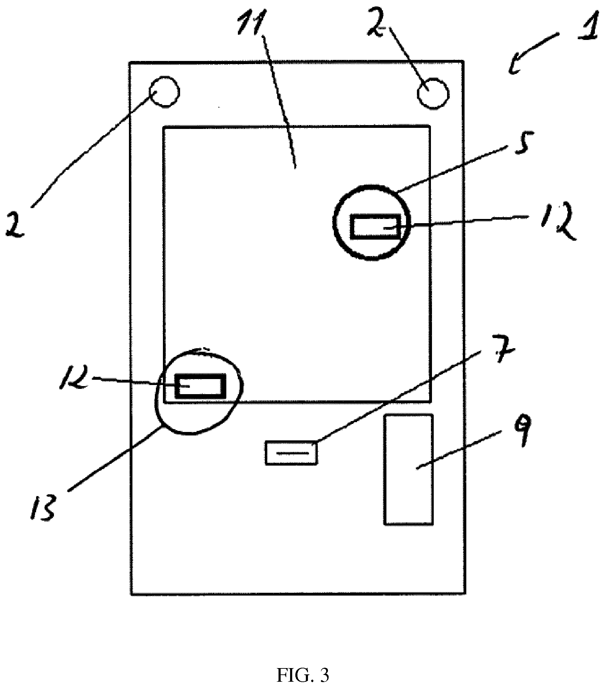

Gemäß einer weiteren Ausgestaltung und bezugnehmend auf Figur 3 kann über die Auswertung der Bilder der zumindest einen Kamera 2 die Größe des aktuellen Benutzers ermittelt werden, wobei für den Fall, dass die Benutzeroberfläche 4 des interaktiven Automaten 1 einen berührungsempfindlichen Bildschirm (touch screen) 11 aufweist, die Anordnung der Bedienflächen am berührungsempfindlichen Bildschirm 11 an die Größe des aktuellen Benutzers angepasst wird.

Bei dem in Figur 3 gezeigten Beispiel wurde mittels Eye- und/oder Face-Tracking ermittelt, dass der aktuelle Benutzer auf den mit 5 bezeichneten Bereich blickt, wobei die als nächste zu bedienende Bedienfläche 12, beispielsweise eine Bedienfläche zur Auswahl eines Zahlungsmittels, die vor der Erkennung des Bereiches 5, auf den der Benutzer blickt in einem anderen Bereich 13 angeordnet war, im Bereich 5, auf den der Benutzer blickt, angezeigt wird.

Hierbei kann nach der Betätigung der Bedienfläche 12 des berührungsempfindlichen Bildschirms 11 die bereits betätigte Bedienfläche durch die nächste zu bedienende Bedienfläche ersetzt werden.

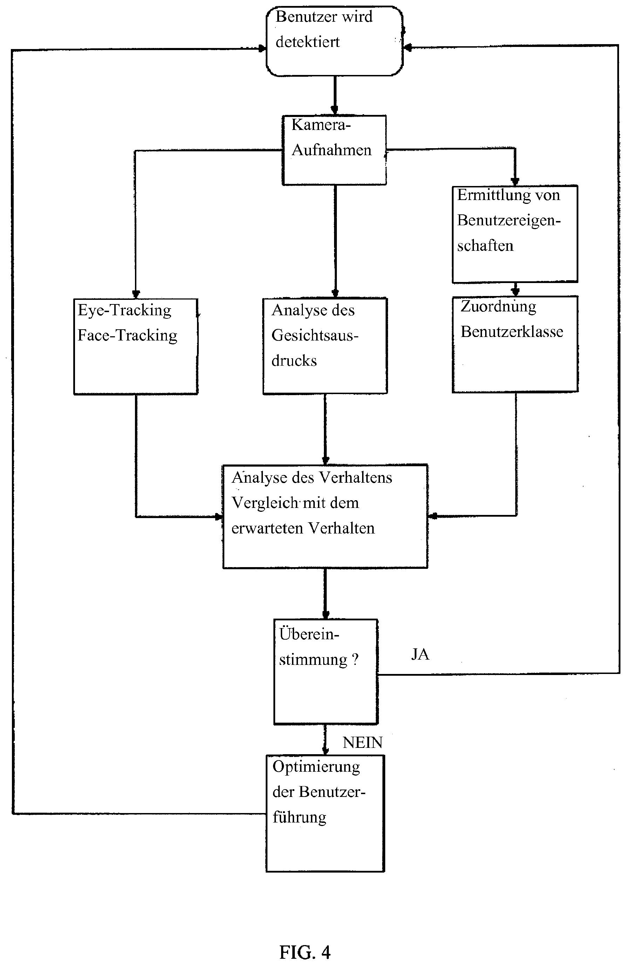

Bezugnehmend auf Figur 4 kann gemäß einer Ausgestaltung der Erfindung das Verfahren zur Optimierung der Benutzerführung und Ergonomie während der Bedienung des interaktiven Automaten beispielsweise folgende Schritte aufweisen:
In einem ersten Schritt wird mittels der zumindest einen Kamera 2 ein vor dem interaktiven Automaten 1 stehender Benutzer erkannt, wobei nach der Erkennung eines Benutzers Bilder des Benutzers aufgenommen werden, wobei mittels der zumindest einen Kamera 2 ein Eye- und/oder Face-Tracking durchgeführt wird, um dadurch zu ermitteln, auf welchen Bereich der Benutzeroberfläche der aktuelle Benutzer gerade blickt.

Gleichzeitig wird mittels des Eye- und/oder Face-Tracking und/oder anhand einer Analyse des Gesichtsausdrucks die aktuelle Gemütslage des aktuellen Benutzers ermittelt, wobei anhand der Bilder Eigenschaften des aktuellen Benutzers, wie beispielsweise Alter und/oder Geschlecht und/oder Kleidungsstil ermittelt werden, wobei anhand dieser Eigenschaften der aktuelle Benutzer einer vordefinierten Benutzerklasse zugeordnet wird und die Benutzeroberfläche des Automaten der Benutzerklasse entsprechend angepasst wird. Beispielsweise werden für den Fall eines Informationsterminals auf die Benutzerklasse maßgeschneiderte Informationen angezeigt, wobei für den Fall eines Warenverkaufsautomaten für die Benutzerklasse geeignete Produkte beworben werden können.

Anschließend wird anhand der Kamerabilder das Verhalten des Benutzers analysiert und mit dem anhand der Benutzerklasse und anhand eines reibungslosen Ablaufs bei der Betätigung des Automaten zu erwartenden Verhalten verglichen, wobei wenn das Benutzerverhalten dem erwarteten Verhalten entspricht, keine Maßnahmen ergriffen werden.

Wenn das Benutzerverhalten dem erwarteten Verhalten nicht entspricht, beispielsweise, wenn Probleme bei der Bedienung des Automaten entstehen oder wenn sich die Gemütslage des aktuellen Benutzers verschlechtert, wird die Benutzerführung optimiert, indem z.B. optische und/oder akustische Signale generiert werden, welche die Aufmerksamkeit des aktuellen Benutzers auf einen nächsten Bedienschritt oder auf eine über eine Anzeigevorrichtung des Automaten angezeigte Information richten und/oder indem eine Kommunikationsverbindung über eine Interkom-Anlage oder Video-Sprechanlage hergestellt wird, um dem Benutzer Hilfe anzubieten. Auch können für den Fall eines Informationsterminals auf eine andere Benutzerklasse maßgeschneiderte Informationen angezeigt werden, wobei für den Fall eines Warenverkaufsautomaten für eine andere, geeignetere Benutzerklasse geeignete Produkte beworben werden können.

## Patentansprüche

1. Interaktiver Automat (1) umfassend eine Benutzeroberfläche (4), **dadurch gekennzeichnet, dass** er zumindest eine Kamera (2) aufweist, deren Bilder in einer Auswerteeinheit ausgewertet werden, um Informationen über den aktuellen Benutzer (3) zu gewinnen, wobei anhand der gewonnenen Informationen die Benutzerführung und/oder für den Fall, dass die Benutzeroberfläche (4) des interaktiven Automaten (1) einen berührungsempfindlichen Bildschirm (11) aufweist, die Anordnung der Bedienflächen des berührungsempfindlichen Bildschirms (11) anpassbar sind.

2. Interaktiver Automat (1) nach Anspruch 1, **dadurch gekennzeichnet, dass** mittels der zumindest einen Kamera (2) ein Eye- und/oder Face-Tracking durchführbar ist, um zu ermitteln, auf welchen Bereich der Benutzeroberfläche (4) der aktuelle Benutzer (3) gerade blickt, wobei basierend auf dieser Information zur Optimierung der Benutzerführung optische und/oder akustische Signale generierbar sind, welche die Aufmerksamkeit des aktuellen Benutzers (3) auf einen nächsten Bedienschritt oder auf eine über eine Anzeigevorrichtung (10) des Automaten (1) angezeigte Information richten.

3. Interaktiver Automat (1) nach Anspruch 1 oder 2, **dadurch gekennzeichnet, dass** mittels des Eye- und/oder Face-Tracking und /oder mittels einer Analyse des Gesichtsausdrucks anhand der Bilder der zumindest einen Kamera (2) die aktuelle Gemütslage des aktuellen Benutzers (3) ermittelbar ist, wobei, wenn eine schlechte Gemütslage oder ein ratloser Gesichtsausdruck erkannt wird, eine Kommunikationsverbindung über eine Interkom-Anlage oder Video-Sprechanlage herstellbar ist, um dem aktuellen Benutzer (3) Hilfe anzubieten.

4. Interaktiver Automat (1) nach Anspruch 1, 2 oder 3, **dadurch gekennzeichnet, dass** über die zumindest eine Kamera (2) Informationen über das Alter und das Geschlecht des aktuellen Benutzers (3) gewinnbar sind, wobei auf diese Eigenschaften maßgeschneiderte Informationen anzeigbar sind.

5. Interaktiver Automat (1) nach einem der vorangehenden Ansprüche, **dadurch gekennzeichnet, dass** die Benutzeroberfläche (4) des interaktiven Automaten (1) einen berührungsempfindlichen Bildschirm (11) aufweist, wobei über die Auswertung der Bilder der zumindest einen Kamera (2) die Größe des aktuellen Benutzers (3) ermittelbar ist und wobei die Anordnung der Bedienflächen des berührungsempfindlichen Bildschirms (11) an die Größe des aktuellen Benutzers (3) anpassbar ist.

6. Interaktiver Automat (1) nach Anspruch 5, **dadurch gekennzeichnet, dass** die nächste zu bedienende Bedienfläche auf den Teil des berührungsempfindlichen Bildschirms (11) anordenbar ist, auf den der aktuelle Benutzer (3) gerade blickt.

7. Verfahren zur Optimierung der Benutzerführung und Ergonomie während der Bedienung eines interaktiven Automaten (1) umfassend eine Benutzeroberfläche (4) und zumindest eine Kamera (2), **dadurch gekennzeichnet, dass** die Bilder der zumindest einen Kamera (2) in einer Auswerteeinheit ausgewertet werden, um Informationen über den aktuellen Benutzer (3) zu gewinnen, wobei anhand der gewonnenen Informationen die Benutzerführung und/oder für den Fall, dass die Benutzeroberfläche (4) des interaktiven Automaten (1) einen berührungsempfindlichen Bildschirm (11) aufweist, die Anordnung der Bedienflächen des berührungsempfindlichen Bildschirms (11) angepasst wird.

8. Verfahren zur Optimierung der Benutzerführung und Ergonomie während der Bedienung eines interaktiven Automaten (1) umfassend eine Benutzeroberfläche (4) und zumindest eine Kamera (2), nach Anspruch 7, **dadurch gekennzeichnet, dass** mittels der zumindest einen Kamera (2) ein Eye- und/oder Face-Tracking durchgeführt wird, um zu ermitteln, auf welchen Bereich der Benutzeroberfläche (4) der aktuelle Benutzer gerade blickt, wobei basierend auf dieser Information zur Optimierung der Benutzerführung optische und/oder akustische Signale generiert werden, welche die Aufmerksamkeit des aktuellen Benutzers (3) auf einen nächsten Bedienschritt oder auf eine über eine Anzeigevorrichtung (10) des Automaten (1) angezeigte Information richten.

9. Verfahren zur Optimierung der Benutzerführung und Ergonomie während der Bedienung eines interaktiven Automaten (1) umfassend eine Benutzeroberfläche (4) und zumindest eine Kamera (2), nach Anspruch 7 oder 8, **dadurch gekennzeichnet, dass** mittels eines Eye- und/oder Face-Tracking und /oder mittels einer Analyse des Gesichtsausdrucks anhand der Bilder der zumindest einen Kamera (2) die aktuelle Gemütslage des aktuellen Benutzers (3) ermittelt wird, wobei, wenn eine schlechte Gemütslage oder ein ratloser Gesichtsausdruck erkannt wird, eine Kommunikationsverbindung über eine Interkom-Anlage oder Video-Sprechanlage hergestellt wird, um dem aktuellen Benutzer (3) Hilfe anzubieten.

10. Verfahren zur Optimierung der Benutzerführung und Ergonomie während der Bedienung eines interaktiven Automaten (1) umfassend eine Benutzeroberfläche (4) und zumindest eine Kamera (2), nach Anspruch 7, 8 oder 9, **dadurch gekennzeichnet, dass** über die zumindest eine Kamera (2) Informationen über das Alter und das Geschlecht des aktuellen Benutzers (3) gewonnen werden, wobei auf diese Eigenschaften maßgeschneiderte Informationen angezeigt werden.

11. Verfahren zur Optimierung der Benutzerführung und Ergonomie während der Bedienung eines interaktiven Automaten (1) umfassend eine Benutzeroberfläche (4) und zumindest eine Kamera (2), nach Anspruch 7, 8, 9 oder 10, **dadurch gekennzeichnet, dass** wenn die Benutzeroberfläche (4) des interaktiven Automaten (1) einen berührungsempfindlichen Bildschirm (11) aufweist, über die Auswertung der Bilder der zumindest einen Kamera (2) die Größe des aktuellen Benutzers (3) ermittelt wird, wobei die Anordnung der Bedienflächen des berührungsempfindlichen Bildschirms (11) an die Größe des aktuellen Benutzers (3) angepasst wird.

12. Verfahren zur Optimierung der Benutzerführung und Ergonomie während der Bedienung eines interaktiven Automaten (1) umfassend eine Benutzeroberfläche (4) und zumindest eine Kamera (2), nach Anspruch 11, **dadurch gekennzeichnet, dass** die nächste zu bedienende Bedienfläche auf den Teil des berührungsempfindlichen Bildschirms (11) angeordnet wird, auf den der aktuelle Benutzer (3) gerade blickt, wobei der Teil des berührungsempfindlichen Bildschirms (11), auf den der aktuelle Benutzer (3) gerade blickt mittels der über die zumindest eine Kamera (2) durchgeführten ein Eye- und/oder Face-Tracking ermittelt wird.

13. Verfahren zur Optimierung der Benutzerführung und Ergonomie während der Bedienung eines interaktiven Automaten (1) umfassend eine Benutzeroberfläche (4) und zumindest eine Kamera (2), nach Anspruch 11 oder 12, **dadurch gekennzeichnet, dass** nach der Betätigung einer Bedienfläche des berührungsempfindlichen Bildschirms (11) die bereits betätigte Bedienfläche durch die nächste zu bedienende Bedienfläche ersetzt wird.

14. Verfahren zur Optimierung der Benutzerführung und Ergonomie während der Bedienung eines interaktiven Automaten (1) umfassend eine Benutzeroberfläche (4) und zumindest eine Kamera (2), nach einem der Ansprüche 7-13, **dadurch gekennzeichnet, dass** mittels der zumindest einen Kamera (2) erkannt wird, ob der aktuelle Benutzer (3) Bargeld oder eine Kreditkarte in der Hand hält, wobei anschließend mittels optischer und/oder akustischer Signale die Aufmerksamkeit des aktuellen Benutzers (3) auf das entsprechende Modul des interaktiven Automaten (1) gerichtet wird.

15. Verfahren zur Optimierung der Benutzerführung und Ergonomie während der Bedienung eines interaktiven Automaten (1) umfassend eine Benutzeroberfläche (4) und zumindest eine Kamera (2), nach Anspruch 7, umfassend folgende Schritte:
Erkennen mittels der der zumindest einen Kamera (2) eines vor dem interaktiven Automaten 1 stehenden Benutzers (3);
Durchführen mittels der zumindest einen Kamera (2) eines Eye- und/oder Face-Tracking und Ermitteln, auf welchen Bereich der Benutzeroberfläche (4) der aktuelle Benutzer (3) gerade blickt und Ermitteln mittels des Eye- und/oder Face-Tracking und/oder anhand einer Analyse des Gesichtsausdrucks der aktuellen Gemütslage des aktuellen Benutzers (3), wobei anhand der Bilder der zumindest einen Kamera (2) Eigenschaften des aktuellen Benutzers (3) ermittelt werden und anhand dieser Eigenschaften der aktuelle Benutzer (3) einer vordefinierten Benutzerklasse zugeordnet und die Benutzeroberfläche (4) des Automaten (1) der Benutzerklasse angepasst wird;
Analysieren des Verhaltens des aktuellen Benutzers (3) anhand der Kamerabilder und Vergleichen des Benutzerverhaltens mit dem anhand der Benutzerklasse und anhand eines reibungslosen Ablaufs bei der Betätigung des Automaten (1) zu erwartenden Verhalten, wobei wenn das Benutzerverhalten dem erwarteten Verhalten nicht entspricht, die Benutzerführung optimiert wird, indem optische und/oder akustische Signale generiert werden, welche die Aufmerksamkeit des aktuellen Benutzers (3) auf einen nächsten Bedienschritt oder auf eine über eine Anzeigevorrichtung des Automaten (1) angezeigte Information richten und/oder indem eine Kommunikationsverbindung über eine Interkom-Anlage oder Video-Sprechanlage hergestellt wird, um dem Benutzer (3) Hilfe anzubieten.
